# EUROPÄISCHE PATENTSCHRIFT

(11) **EP 0 827 880 B1**
(45) Veröffentlichungstag und Bekanntmachung des Hinweises auf die Patenterteilung: **12.05.2004**
(21) Anmeldenummer: 97113451.5
(22) Anmeldetag: 05.08.1997
(51) Int. Cl.: B60R 21/22

(54) **Anordnung eines Seiten-Airbag-Moduls an einem Kraftfahrzeugsitz**
Arrangement of a side air bag module in a vehicle seat
Agencement d'un module de coussin gonflable latéral dans un siège de véhicule

(30) Priorität: 13.08.1996 DE 19632586
(43) Veröffentlichungstag der Anmeldung: 11.03.1998
(60) Teilanmeldung: 03013673.3
(73) Patentinhaber: ADAM OPEL AG, 65423 Rüsselsheim (DE)
(72) Erfinder: Leuchtmann, Andrew, Dipl.-Ing., 55595 Mandel (DE); Polster, Michael, Dipl.-Ing., 65201 Wiesbaden (DE)
(74) Vertreter: Kümpfel, Heinz, Dipl.-Ing.

(56) Entgegenhaltungen:
- DE-U- 29 510 608
- PATENT ABSTRACTS OF JAPAN vol. 016, no. 235 (M-1257), 29. Mai 1992 (1992-05-29) & JP 04 050052 A (MAZDA MOTOR CORP), 19. Februar 1992 (1992-02-19)
- PATENT ABSTRACTS OF JAPAN vol. 1995, no. 03, 28. April 1995 (1995-04-28) & JP 06 344850 A (HONDA MOTOR CO LTD), 20. Dezember 1994 (1994-12-20)

## Beschreibung

Die Erfindung betrifft eine Anordnung eines Seiten-Airbag-Moduls an einem Kraftfahrzeugsitz gemäß dem Oberbegriff des Patentanspruches 1.

Mit DE 29 510 608 U1 ist eine Seiten-Airbag-Anordnung beschrieben, bei der ein die Rückenlehnenseite bildendes starres Abdeckteil den in der Rückenlehne befindlichen Luftsack abdeckt und gleichzeitig einen Schußkanal zur Entfaltung des Luftsackes bildet.

Bei einer solchen Airbag-Anordnung wird eine sichere Entfaltung des Luftsackes auch unter erschwerten Bedingungen gesichert. Zum Einbau eines solchen Seiten-Airbags in die Lehne ist jedoch eine relativ aufwendige Befestigung des Abdeckteiles am Sitz und an dem Airbag-Modul erforderlich. Insbesondere der Abschluß des Abdeckteiles an benachbarten, durch Polsterstoff bezogene Partien erfordert viel Sorgfalt, um ein ansprechendes Aussehen zu erreichen.

Es ist zwar gemäß DE 40 18 470 auch bekannt, einen in der Sitzlehne untergebrachten Seiten-Airbag durch den Sitzbezugsstoff gänzlich abzudecken, so daß ein dekoratives Abdeckteil nicht erforderlich ist. Jedoch ist dabei von Nachteil, daß das Airbag-Modul vor den Sitzbezugsarbeiten in den Sitz eingebaut werden muß, wobei infolge des am Airbag befindlichen, mit Explosivstoff versehenen Gasgenerators mit besonderer Behutsamkeit vorgegangen werden muß. Nachteilig ist auch, daß bei dieser Ausführung der Seiten-Airbag für den Fahrzeugnutzer nicht sichtbar ist, so daß funktionsbeeinträchtigenden Manipulationen am Sitz nur schwer entgegengewirkt werden kann.

Des weiteren ist aus der gattungsgemäßen JP 4-50052 (A) ein Sitzaufbau für ein Fahrzeug bekannt. Dort ist bei einem Fahrzeugsitz in dem der Seitenwand des Fahrzeugaufbaus gegenüberliegenden Seitenabschnitt der Rückenlehne ein Airbag angeordnet, der sich in einer Richtung senkrecht zur Seitenwand des Fahrzeugaufbaus oder in einer Richtung auf den Zwischenraum zwischen einem Fahrzeuginsassen und der Seitenwand des Fahrzeugaufbaus hin auffaltet. Damit soll ein Aufbau zur Verfügung gestellt werden, bei dem der Airbag unabhängig von einer Verschiebeposition des Sitzes stets in einer optimalen Position aufgeblasen werden kann.

Schließlich offenbart die JP 6-344850 (A) eine gattungsfremde Airbag-Abdeckung für ein Fahrzeug, die in einem im Armaturenbrett beifahrerseits ausgebildeten Öffnungsabschnitt angebracht ist, wobei ein Bereich der Airbag-Abdeckung, an den die Umfangskante des Öffnungsabschnittes anstößt, in Form eines elastischen Kastens ausgebildet ist. Damit sollen Verformungen des Armaturenbrettes beim Auffalten des Airbags vermieden werden.

Es ist Aufgabe der Erfindung, eine Anordnung für ein Seiten-Airbag-Modul an einem gepolsterten und mit einem Sitzbezug versehenen Kraftfahrzeug zu schaffen, die ein problemloses Zusammenbauen des Sitzes ermöglicht, mit der saubere Übergänge zwischen Sitzbezug und Airbag-Modul erzielbar sind und bei der ein Airbag-Modul für die Fahrzeugnutzer deutlich erkennbar ist, so daß Hinweise auf unerlaubte Manipulationen am Sitz besser akzeptiert werden.

Erfindungsgemäß wird diese Aufgabe durch die Merkmale des ersten Patentanspruches gelöst.

Durch eine derartige Anordnung eines im Seitenbereich der Sitzlehne befindlichen Seiten-Airbag-Moduls werden die mit der erfindungsgemäßen Aufgabe angestrebten Vorteile erzielt.

Besonders vorteilhafte Ausführungsformen sind mit den Unteransprüchen dargestellt.

So werden durch die Ausführung des Kragens als elastische und mit Vorspannung auf der Sitzkontur aufliegende Lippe die in einer Serienfertigung unvermeidlich auftretenden Toleranzen so ausgeglichen, daß ein sauberer Übergang erzielt wird.

Eine besonders gute und faltenfreie Halterung des Randes des Sitzbezuges an der Kontur des Seiten-Airbag-Moduls gelingt auch bei schwierig handhabbaren Bezugsstoffen, da der Sitzbezug zwischen dem Kragen und einem auf diesen aufgesetzten Rahmen gehalten ist. Dabei kann der Rahmen vorteilhaft durch clips- bzw. dornartige Haltehaken mit dem Kragen verbunden sein, so daß der Montageaufwand gering bleibt.

Eine weitere qualitative Absicherung der Montage, z. B. bei Verwendung von elastischen Stoffen für den Sitzbezug, kann erzielt werden durch eine Verstärkung des Randes des Sitzbezuges an der Öffnung für das Seiten-Airbag-Modul.

Ausführungsbeispiele sind nachstehend anhand von Zeichnungen näher beschrieben, wobei nicht alle Ausführungsbeispiele unter dem Wortlaut der beanspruchten Erfindung fallen. Es zeigen
- Fig. 1:: das Skelett einer Sitzlehne eines Kräftfahrzeugsitzes;
- Fig. 2:: das Skelett nach Figur 1 in Verbindung mit einem vorgefertigten Polsterteil für die Sitzlehne;
- Fig. 3:: die aus dem Skelett und dem Polsterteil nach Figur 2 vormontierte und für den Einbau eines Seiten-Airbag-Moduls vorbereitete Sitzlehne;
- Fig. 4:: ein Seiten-Airbag-Modul;
- Fig. 5:: ein Seiten-Airbag-Modul im Schnitt entlang der Linie A-A nach Figur 4, verbunden mit einer Sitzlehne gemäß Figur 3;
- Fig. 6:: ein Seiten-Airbag-Modul im Schnitt entlang der Linie B-B nach Figur 4, verbunden mit einer Sitzlehne gemäß Figur 3;
- Fig. 7:: das Skelett einer weiteren Sitzlehne, vormontiert mit einem Seiten-Airbag-Modul;
- Fig. 8:: das Skelett nach Figur 7 in Verbindung mit einem vorgefertigten Polsterteil für die Sitzlehne;
- Fig. 9:: die aus dem Skelett und dem Polsterteil nach Figur 8 vormontierte Sitzlehne mit einem den Rand des Sitzbezuges fixierenden Rahmen;
- Fig. 10:: ein Seiten-Airbag-Modul im Schnitt entlang der Linie B-B nach Figur 4, verbunden mit einer Sitzlehne gemäß Figur 9 und entsprechend der Erfindung;
- Fig. 11:: eine vergrößerte Darstellung der Randverbindung zwischen dem Seiten-Airbag-Modul und dem Sitzbezug bei einer Sitzlehne gemäß Figur 9;
- Fig. 12:: eine Einzelheit einer Randverbindung zwischen dem Seiten-Airbag-Modul und dem Sitzbezug gemäß Figur 9 mit einer Verstärkung des Randes des Sitzbezuges;
- Fig. 13 bis Fig. 15:: Ausführungsbeispiele für Randverstärkungen.

Ein Skelett 1 einer Sitzlehne eines Kraftfahrzeugsitzes ist an einer seiner Seitenteile 2 mit einer Aufnahmeöffnung 3 versehen, in welche ein Seiten-Airbag-Modul 4 einsetzbar und befestigbar ist. Das Skelett 1 trägt ein Polsterteil 5, das mit einem den Sitzbezug 6 bildenden Bezugsstoff umgeben ist. Der Sitzbezug 6 ist mit einer Öffnung 7 versehen, die bei an das Skelett 1 angebautem Polsterteil 5 deckungsgleich über der Aufnahmeöffnung 3 liegt. Das Seiten-Airbag-Modul 4 hat eine äußere Kontur, der die Aufnahmeöffnung 3 und die Öffnung 7 im Sitzbezug 6 entspricht. Über diese Kontur hinausragend hat das Seiten-Airbag-Modul 4 an der Schnittlinie mit der Sitzoberfläche einen umlaufenden, auf der Sitzkontur aufliegenden flachen Kragen 8; 28.

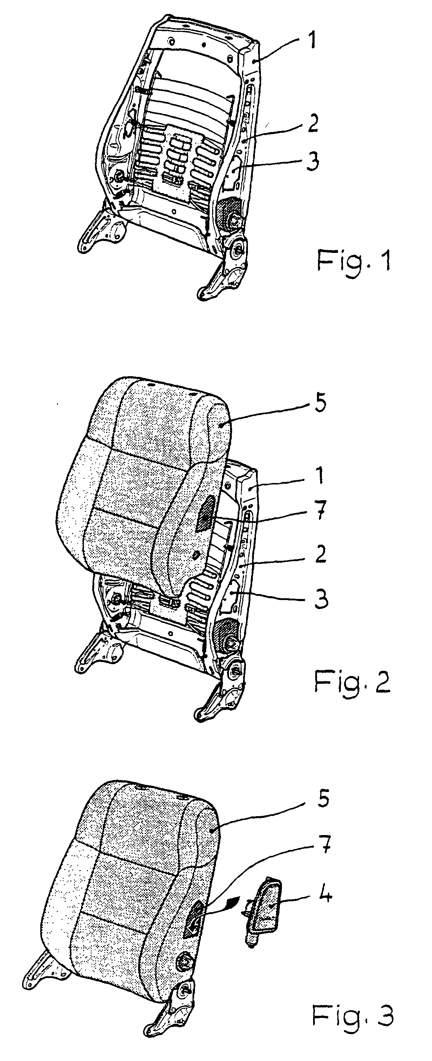

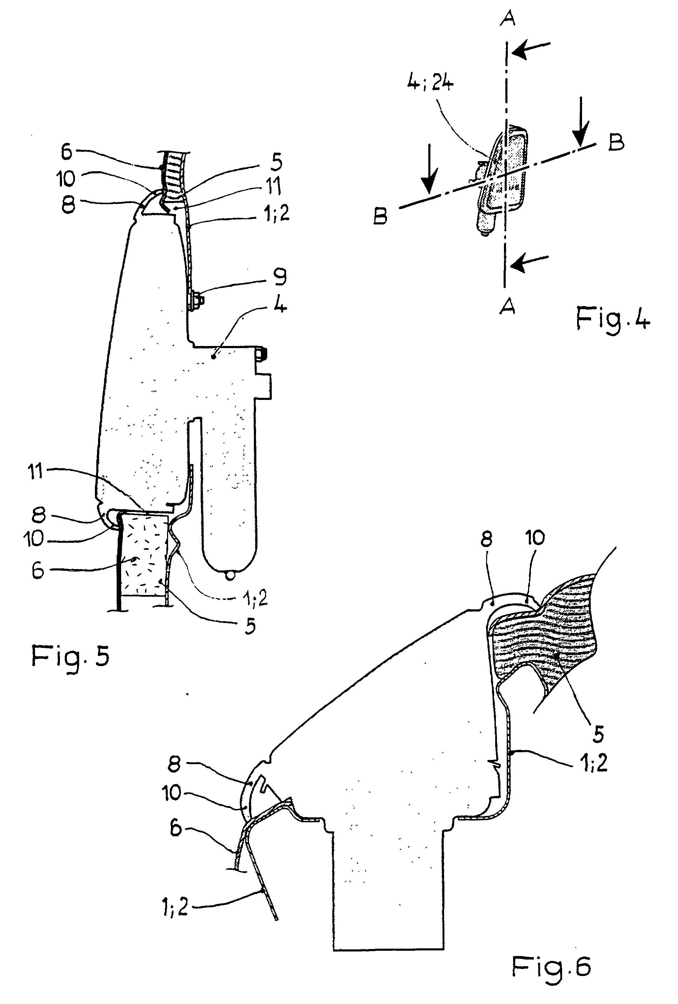

In einem ersten Ausführungsbeispiel, dargestellt in den Figuren 1 bis 6, wird zuerst das Skelett 1 und das Polsterteil 5 zusammengebaut. Danach wird durch die Öffnung 7 im Sitzbezug 6 das Seiten-Airbag-Modul 4 in die Aufnahmeöffnung am Skelett 1 eingesetzt und mit Schrauben 9 befestigt. Der Kragen 8 bildet hier eine elastische und mit Vorspannung auf dem Sitzbezug 6 des Polsterteiles 5 aufliegende Lippe 10 (Figur 5 und Figur 6), die einen Spalt 11 zwischen dem Polsterteil 5 und dem Seiten-Airbag-Modul 4 abdeckt und den Sitzbezug 6 an den Rändern der Öffnung 7 fixiert.

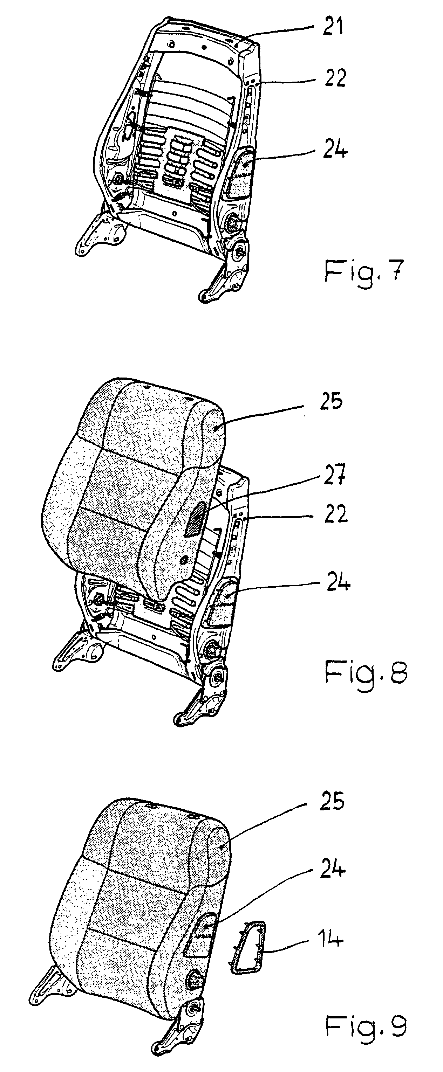

Ein weiteres Ausführungsbeispiel veranschaulichen die Figuren 7 bis 12.

Ein Skelett 21 einer Sitzlehne eines Kraftfahrzeugsitzes ist an seinem Seitenteil 22 mit einem in einer Aufnahmeöffnung eingesetzten Seiten-Airbag-Modul 24 fest verbunden. Das Skelett 21 trägt ein Polsterteil 25, das mit einem den Sitzbezug 26 bildenden Bezugsstoff umgeben ist. Der Sitzbezug 26 ist mit einer Öffnung 27 versehen, die bei Einbaulage des Polsterteils 25 über dem am Seitenteil 22 befestigten Seiten-Airbag-Modul 24 liegt.

Ein umlaufender Kragen 28 des Seiten-Airbag-Moduls 24 liegt dabei teilweise auf dem Seitenteil 22 an, teilweise begrenzt er den Raum für das Polsterteil 25. Der Rand 12 der Öffnung 27 des Sitzbezuges 26 liegt auf dem Kragen 28 außen auf. Der Kragen 28 ist über seinen Umfang verteilt mit Öffnungen 13 versehen. Ein der Form des Kragens 28 angepaßter Rahmen 14 überdeckt den Rand 12 der Öffnung 27. Am Rahmen 14 befinden sich dornartige Haltehaken 15, die in gleicher Weise über den Umfang verteilt sind wie die Öffnungen 13 am Kragen 28. Die Haltehaken 15 des Rahmens 14 durchdringen die Öffnungen 13 des Kragens 28 und greifen formschlüssig hinter den Kragen 28.

Der Rahmen 14 ist ringsum mit einem elastischen Bund 16 versehen, der sich bei eingerasteten Haltehaken 15 unter Vorspannung auf den Rand 12 der Öffnung 27 des Sitzbezuges 26 auflegt und diesen gegen den Kragen 28 preßt.

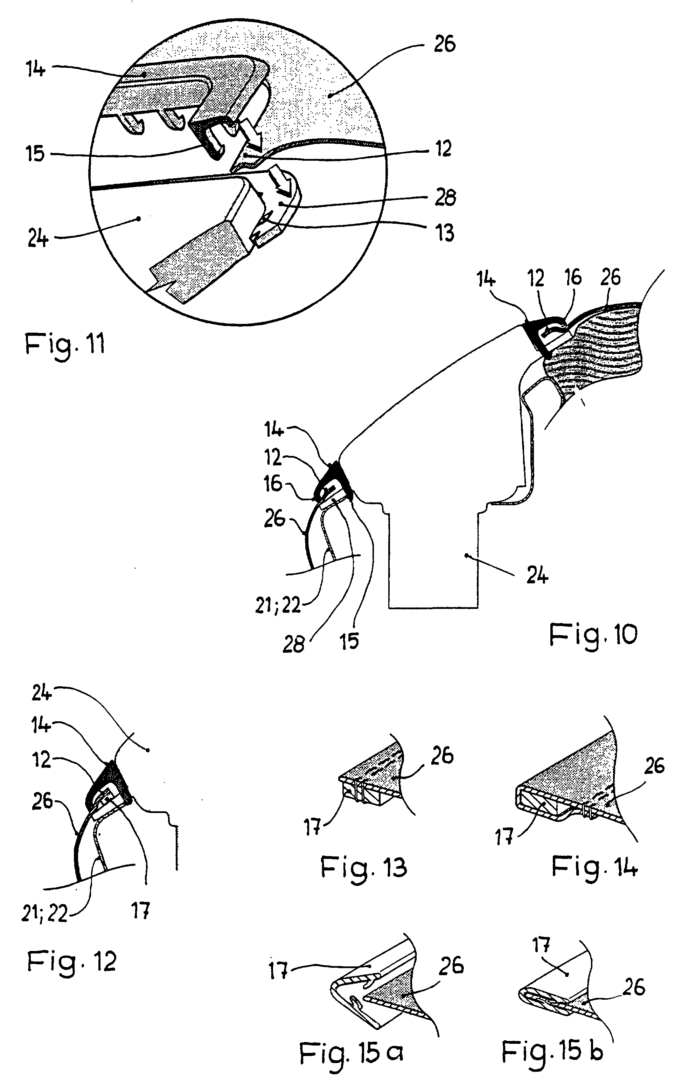

Der Rand 12 kann, wie Figur 12 zeigt, auch mit einer Verstärkung 17 versehen sein, so daß der Rand 12 gegenüber dem Kragen 28 und dem Rahmen 14 auch formschlüssig gehalten ist.

Die Figuren 13 bis 15 zeigen verschiedene mögliche Formen von Randverstärkungen 17. So ist bei Figur 13 die Verstärkung 17 mit einer Doppelnaht 18 befestigt. Bei Figur 14 ist die Verstärkung 17 in einen Saum eingenäht. Figur 15 zeigt eine Verstärkung 17, die aus einem plastisch verformbaren Streifen 19 besteht, der über die Kante des Randes 12 gepreßt ist und mit Krallen am Stoff festhält. Figur 15a zeigt den Streifen 19 in unverformtem Zustand und Figur 15b in verformtem Zustand in Verbindung mit dem Rand 12.

## Patentansprüche

1. Anordnung eines Seiten-Airbag-Moduls (24) an einem mit einem Polsterteil (25) und einem Sitzbezug (26) versehenen Kraftfahrzeugsitz, wobei im Seitenbereich der Sitzlehne eine der Kontur des Seiten-Airbag-Moduls (24) entsprechende Öffnung vorgesehen ist, durch die das Seiten-Airbag-Modul (24) bündig zwischen Sitzoberfläche und Airbag-Abdeckung im Sitz versenkt und an dessen Sitzrahmen befestigt ist, **dadurch gekennzeichnet, daß** das Seiten-Airbag-Modul (24) in der Schnittlinie mit der Sitzoberfläche einen umlaufenden, auf der Sitzkontur aufliegenden flachen Kragen (28) aufweist, der den Spalt zwischen dem Polsterteil (25) und dem Seiten-Airbag-Modul (24) überdeckt, wobei der Rand (12) des Sitzbezuges (26) an der Öffnung (27) außen auf dem Kragen (28) aufliegt und ein dem Kragen (28) adäquater umlaufender Rahmen (14) über den Rand (12) des Sitzbezuges (26) auf dem Kragen (28) befestigt ist und den Rand (12) des Sitzbezuges (26) am Kragen (28) fixiert.

2. Anordnung nach Anspruch 1, **dadurch gekennzeichnet, daß** der Kragen (28) als elastische, mit Vorspannung auf der Sitzkontur aufliegende Lippe ausgebildet ist.

3. Anordnung nach Anspruch 1, **dadurch gekennzeichnet, daß** der Rahmen (14) mit über seinen Umfang verteilte mit in Richtung zum Kragen (28) gerichteten Haltehaken (15) und der Kragen (28) mit gleichermaßen verteilt angeordneten Öffnungen (13) zur Aufnahme der Haltehaken (15) versehen ist, wobei die Haltehaken (15) in die Öffnungen (13) eingreifen und in diesen formschlüssig gehalten sind.

4. Anordnung nach einem oder mehreren der Ansprüche 1 bis 3, **dadurch gekennzeichnet, daß** der Rand (12) des Sitzbezuges (26) an der Öffnung (27) verstärkt ist.

## Claims

1. Arrangement of a side airbag module (24) on a motor vehicle seat provided with an upholstery portion (25) and a seat cover (26), wherein in the side region of the seat back is provided an opening which corresponds to the contour of the side airbag module (24) and through which the side airbag module (24) is countersunk in the seat, flush between seat surface and airbag cover, and attached to the seat frame thereof, **characterised in that** the side airbag module (24) has, in the line of intersection with the seat surface, a circumferential flat collar (28) which rests on the seat contour and which covers the gap between the upholstery portion (25) and the side airbag module (24), wherein the edge (12) of the seat cover (26) at the opening (27) rests on the outside of the collar (28), and a circumferential frame (14) which fits the collar (28) is mounted over the edge (12) of the seat cover (26) on the collar (28) and fixes the edge (12) of the seat cover (26) to the collar (28).

2. Arrangement according to claim 1, **characterised in that** the collar (28) is designed as a resilient lip resting on the seat contour with initial tension.

3. Arrangement according to claim 1, **characterised in that** the frame (14) is provided with retaining hooks (15) distributed over its circumference and directed in a direction towards the collar (28), and the collar (28) is provided with similarly distributed openings (13) for receiving the retaining hooks (15), wherein the retaining hooks (15) engage in the openings (13) and are held in the latter in form-locking relationship.

4. Arrangement according to one or more of claims 1 to 3, **characterised in that** the edge (12) of the seat cover (26) is reinforced at the opening (27).

## Revendications

1. Agencement d'un module de coussin gonflable latéral (24) dans un siège de véhicule doté d'une pièce rembourrée (25) et d'une housse de siège (26), une ouverture correspondant au contour du module de coussin gonflable latéral (24) étant prévue dans la zone latérale du dossier de siège, ouverture par laquelle le module de coussin gonflable latéral (24) s'enfonce dans le siège de façon affleurée l'espace situé entre la surface du siège et le revêtement du coussin gonflable et est fixé au cadre de siège, **caractérisé en ce que** le module de coussin gonflable latéral (24) comporte, sur la ligne d'intersection avec la surface du siège et sur toute sa périphérie, un collet (28) plat, se trouvant sur le contour du siège et recouvrant l'intervalle entre la pièce rembourrée (25) et le module de coussin gonflable latéral (24), le bord (12) de la housse de siège (26) se trouvant à l'extérieur sur le collet (28) au niveau de l'ouverture (27), et **en ce qu'**un cadre périphérique (14) adapté au collet (28) est fixé au collet (28) au-dessus du bord (12) de la housse de siège (26) et fixe le bord (12) de la housse de siège (26) sur le collet (28).

2. Agencement selon la revendication 1, **caractérisé en ce que** le collet (28) est réalisé sous la forme de lèvre élastique posée avec une précontrainte sur le contour du siège.

3. Agencement selon la revendication 1, **caractérisé en ce que** le bâti (14) est doté de crochets de fixation (15) orientés en direction du collet (28) et répartis à sa périphérie et **en ce que** le collet (28) est doté d'ouvertures (13) servant à loger les crochets de fixation (15) et réparties dans les mêmes proportions, de sorte que les crochets de fixation (15) s'engagent dans les ouvertures (13) et y soient maintenus par conjugaison de forme.

4. Agencement selon l'une ou plusieurs des revendications 1 à 3, **caractérisé en ce que** le bord (12) de la housse de siège (26) est renforcé au niveau de l'ouverture (27).
